# EUROPÄISCHE PATENTSCHRIFT

(11) **EP 3 408 227 B1**
(45) Veröffentlichungstag und Bekanntmachung des Hinweises auf die Patenterteilung: **23.10.2019**
(21) Anmeldenummer: 17700861.2
(22) Anmeldetag: 23.01.2017
(51) Int. Cl.: C01G 41/02

(54) **VERFAHREN ZUR HERSTELLUNG VON WOLFRAMOXID UND WOLFRAM-MISCHOXIDEN**
METHOD FOR PRODUCING TUNGSTEN OXIDE AND MIXED TUNGSTEN OXIDES
PROCEDE DE FABRICATION D'OXYDE DE TUNGSTENE ET OXYDES MIXTES DE TUNGSTENE

(30) Priorität: 27.01.2016 EP 16152935
(43) Veröffentlichungstag der Anmeldung: 05.12.2018
(73) Patentinhaber: Evonik Degussa GmbH, 45128 Essen (DE)
(72) Erfinder: KATUSIC, Stipan, 65812 Bad Soden (DE); KRESS, Peter, 63791 Karlstein (DE); ALFF, Harald, 63796 Kahl (DE); WIEGAND, Armin, 63538 Großkrotzenburg (DE); HAGEMANN, Michael, 63796 Kahl (DE)
(74) Vertreter: Evonik Patent Association
(86) Internationale Anmeldenummer: PCT/EP2017/051309
(87) Internationale Veröffentlichungsnummer: WO 2017/129516

(56) Entgegenhaltungen:
- WO-A2-2009/059900
- WO-A2-2011/005631
- US-A1- 2010 102 700
- WANG: "Ferroelectric WO3 nanoparticles for acetone selective detection", CHEMISTRY OF MATERIALS, Bd. 20, Nr. 15, 1. Januar 2008 (2008-01-01), Seiten 4794-4796, XP055000062, ISSN: 0897-4756, DOI: 10.1021/cm800761e & L. Madler ET AL: "Supporting Information Synthesis and characterization methods", J. Mater. Res, Bd. 17, 1. Januar 2002 (2002-01-01), Seiten 1-5, XP055270845,
- WEGNER K ET AL: "Scale-up of nanoparticle synthesis in diffusion flame reactors", CHEMICAL ENGINEERING SCIENCE, OXFORD, GB, Bd. 58, Nr. 20, 1. Oktober 2003 (2003-10-01), Seiten 4581-4589, XP004458682, ISSN: 0009-2509, DOI: 10.1016/J.CES.2003.07.010

## Beschreibung

Die Erfindung betrifft ein Verfahren zur Herstellung von Wolframoxidpulvern mittels einer Flammenspraypyrolyse.

Wolframoxide sind bekannte IR-absorbierende Substanzen, die auch eine gute elektrische Leitfähigkeit aufweisen können. In der Regel wird ein solches Mischoxid erhalten, indem man eine Lösung, welche eine Wolframverbindung und gegebenenfalls eine Verbindung einer Mischoxidkomponente enthält, bereitstellt, das Lösungsmittel anschließend entfernt und den verbleibenden Feststoff bei Temperaturen von ca. 500°C in einer reduzierend wirkenden Atmosphäre behandelt. Beispielhaft sei die EP1801815 genannt, die die Herstellung eines Wolfram-Mischoxides der Formel MₓW_{y}O_{z} beschreibt, mit M = Alkalimetall, 0,001 ≤ x/y ≤ 1,1 und 2,2≤ z/y ≤3,0. Oft zeigen so hergestellte Pulver eine schlechte Dispergierbarkeit, beispielsweise in einem Lack. Daher sind oft aufwändige Mahl- und Dispergierschritte notwendig.

In der US 2010/102700 werden Wolfram-Mischoxide mittels einer Flammenspraypyrolyse hergestellt. Dabei wird eine Lösung, welche eine Wolframverbindung und eine Verbindung der Mischoxidkomponente enthält, in eine Flamme eingebracht und dort oxidiert. Jedoch werden nur Materialien mit einer BET-Oberfläche von ca. 60-80 m²/g offenbart. Um eine ausreichende Kristallinität zu erzielen, wird das Material aus der Flammenspraypyrolyse nachfolgend thermisch behandelt, wodurch die BET-Oberfläche auf Werte von ca. 20 m²/g reduziert wird. Hierdurch verschlechtert sich die Dispergierbarkeit.

Wünschenswert wäre ein Verfahren, welches die Herstellung von Wolframoxiden hoher Kristallinität und guter Dispergierbarkeit erlaubt.

Gegenstand der Erfindung sind ein einstufiges und ein zweistufiges Verfahren zur Herstellung von Wolframoxid oder eines Wolfram-Mischoxides. Beide Verfahren umfassen eine Flammenspraypyrolyse.

Das zweistufige Verfahren zur Herstellung eines Wolframoxidpulvers oder eines Wolfram-Mischoxidpulvers der allgemeinen Formel MₓWO₃, wobei M = Na, K, Rb, Li und Cs, 0,1 ≤ x ≤ 0,5, bevorzugt x = 0,33, umfasst die aufeinanderfolgenden Schritte
a) Bereitstellung einer Lösung, enthaltend jeweils ein oder mehrere Wolfram und gegebenenfalls M enthaltende Verbindungen in einer Konzentration entsprechend der Stöchiometrie MₓWO₃,
b) Zerstäuben der Lösung oder der Lösungen unter Bildung eines Aerosoles in einen Reaktionsraum hinein,
c) Reaktion des Aerosoles im Reaktionsraum mit einer Wasserstoff-/Sauerstoff-Flamme für die 1 < O_{2,primär}/0,5H₂≤ 3 gilt,
   wobei der Reaktionsraum so ausgebildet ist, dass er zwei Reaktionszonen mit zwei unterschiedlichen Geschwindigkeiten v₁ und v₂ des Reaktionsgemisches umfasst mit v₂ = 0,3 - 0,8 v₁, bevorzugt v₂ = 0,4 - 0,7 v₁ und 0,5 ≤ v₁ ≤ 10 Nm/s, bevorzugt 1 ≤ v₁ ≤ 5 Nm/s
d) Abtrennung des Feststoffes von dampf- oder gasförmigen Stoffen und
e) Überleiten eines reduzierend wirkenden Gasstromes über den abgetrennten Feststoff bei einer Temperatur von 450-700°C.

Die BET-Oberfläche der nach dem erfindungsgemäßen Verfahren hergestellten Wolframoxidpulver beträgt 1 - 10 m²/g.

Das erfindungsgemäße Verfahren eignet sich bevorzugt zur Herstellung von WO₃, Li_{0,33}WO₃, Na_{0,33}WO₃, K_{0,33}WO₃, Rb_{0,33}WO₃, Cs_{0,33}WO₃, Cs_{0,20}WO₃ und Cs_{0,25}WO₃. Ebenso können Wolfram-Mischoxidpulver der allgemeinen Formel Mₓ₁Mₓ₂WO₃ mit x1 + x2 = x , die neben Wolfram zwei Metalle ausgewählt aus der Gruppe Na, K, Rb, Li und Cs enthalten, hergestellt werden, beispielsweise Na_{0,1}K_{0,1}WO₃.

Die erste Reaktionszone beginnt mit dem Punkt des Einbringens des Aerosoles in den Reaktionsraum. Die zweite Reaktionszone schließt sich der ersten an. v₁ ist die mittlere Geschwindigkeit in der ersten Reaktionszone, v₂ die mittlere Geschwindigkeit in der zweiten Reaktionszone. Dabei ist v₁ größer als v₂. Dies kann beispielsweise durch einen kleineren Querschnitt in der ersten Reaktionszone erreicht werden. Der Berechnung von v₁ und v₂ liegen die Gasvolumina der nicht umgesetzten Einsatzstoffe, beispielsweise Stickstoff oder überschüssiger Sauerstoff und der Produkte, im wesentlichen Wasserdampf, zugrunde. Bei den Angaben zur Geschwindigkeit handelt es sich um normierte Geschwindigkeiten. Sie ergeben sich durch Division des Volumenstromes mit der Einheit Nm³/h und der Querschnittsfläche.

Der Index "O₂, primär" bezeichnet den Sauerstoff der Luft oder gegebenenfalls der mit Sauerstoff angereicherten Luft, der die Flamme bildet. Daneben kann es sinnvoll sein, separat von dieser Luft, zusätzlich Luft, Sekundärluft, direkt in den Reaktionsraum einzubringen. Der Index "O₂, sekundär" bezeichnet dann den Sauerstoff der Sekundärluft. Die Sekundärluft wird dabei bevorzugt so geführt, dass sie erst in Reaktionszone 2 in den Reaktionsraum eintritt.

Schließlich kann auch das Zerstäuben der Lösung mittels Luft erfolgen. Der Index "O₂, Zerstäubung" bezeichnet dann den Sauerstoff der Zerstäubungsluft. Der Index "O₂, ttl" bezeichnet schließlich den Gesamtsauerstoff. Der Gesamtsauerstoff wird am besten so gewählt, dass 1,5 ≤ O_{2,ttl} /0,5H₂ ≤ 5 ist.

Das Verhältnis O_{2,ttl} /0,5H₂ beziehungsweise O_{2,primär}/0,5H₂ rührt von der Reaktion von 2 mol Wasserstoff mit 1 mol Sauerstoff gemäß 2H₂ + O₂ -> 2H₂O her.

Die beanspruchten Maßnahmen bezüglich O_{2,primär}/0,5H₂ und v₂ = 0,4-0,8 v₁ resultieren in niedrigen Temperaturen von ca. 500-750°C bei der Flammenspraypyrolyse und einem Material mit überraschend niedrigen BET-Oberfläche von 1 - 20 m²/g und bereits guter Kristallinität.

Es gilt, dass die BET-Oberfläche des reduzierten Materiales kleiner ist als die des Materiales aus der Flammenspraypyrolyse ist. Gewöhnlich ist das Verhältnis BET_{reduziert}/ BET_{FSP} 0,60 - 0,95.

Die Wasserstoff-/Sauerstoffflamme, die in den Reaktionsraum hinein brennt, wird gebildet, indem man ein Sauerstoff enthaltendes Gas und ein bei der Reaktion mit Sauerstoff Wasser bildendes Brenngas zündet.

In einer besonderen Ausführungsform werden die mittleren Verweilzeiten des Reaktionsgemisches in Reaktionszone 1 und Reaktionszone 2 so gewählt, dass t₂ > 0,5 t₁, bevorzugt 0,7 t₁ ≤ t₂ ≤ 0,9 t₁, wobei t₁ die mittlere Verweilzeit des Reaktionsgemisches in Reaktionszone 1 und t₂ die mittlere Verweilzeit des Reaktionsgemisches in Reaktionszone 2 ist.

Die mittlere Verweilzeit t₁ ist bevorzugt 0,2 - 1 s, besonders bevorzugt 0,3 - 0,7 s. Die mittlere Verweilzeit t₂ ist bevorzugt 0,1 - 0,8 s, besonders bevorzugt 0,2 - 0,5 s.

Als reduzierend wirkender Gasstrom kommen Wasserstoff, Wasserstoff/Stickstoff-Gemische oder Wasserstoff/Edelgas-Gemische in Frage.

Neben dem zweistufigen Verfahren umfassend eine Flammenspraypyrolyse und eine nachfolgende Reduktion ist auch ein einstufiges Verfahren, bei dem auf den Reduktionschritt verzichtet werden kann, Bestandteil der Erfindung.

Gegenstand der Erfindung ist ein einstufiges Verfahren zur Herstellung eines Wolframoxidpulvers oder eines Wolfram-Mischoxidpulvers der allgemeinen Formel MₓWO₃, wobei M = Na, K, Rb, Li und/oder Cs, 0,1 ≤ x ≤ 0,5 umfassend die aufeinanderfolgenden Schritte
a) Bereitstellung einer Lösung, enthaltend jeweils wenigstens eine Wolframverbindung und gegebenenfalls wenigstens eine M enthaltende Verbindung in einer Konzentration entsprechend der Stöchiometrie MₓWO₃,
b) Zerstäuben der Lösung unter Bildung eines Aerosoles in einen Reaktionsraum hinein,
c) Reaktion des Aerosoles im Reaktionsraum mit einer Wasserstoff-/Sauerstoff-Flamme mit lambda < 1, wobei gilt: lambda = Gesamtsauerstoff/0,5 x Wasserstoff und
d) Abtrennung des Feststoffes von dampf- oder gasförmigen Stoffen.

Wesentliches Verfahrensmerkmal ist lambda < 1. Es bedeutet, dass Wasserstoff und Sauerstoff so zu wählen sind, dass ein stöchiometrischer Überschuß von Wasserstoff bezüglich der Gleichung H₂ + 0,5 O₂ -> H₂O vorliegt. Bevorzugt gilt 0,6 ≤ lambda < 1, besonders bevorzugt 0,7 ≤ lambda ≤ 0,95 und ganz besonders bevorzugt 0,8 ≤ lambda ≤ 0,9.

Die mittlere Verweilzeit im Reaktionsraum beträgt beim einstufigen Verfahren bevorzugt 1 - 5 s.

Bei den erfindungsgemäßen Verfahren sind feine Tröpfchen der Lösung Bestandteil des Aerosoles. Bevorzugt weisen die feinen Tröpfchen eine mittlere Tröpfchengröße von weniger als 120 µm, besonders bevorzugt von 30 - 100 µm, auf. Zur Erzeugung der Tröpfchen werden üblicherweise Ein- oder Mehrstoffdüsen eingesetzt.

Die eingesetzte Lösung soll eine möglichst hohe Konzentration aufweisen. Dabei ist ein Optimum zwischen der Produktionsmenge und den Stoffeigenschaften des Pulvers anzustreben. Für die erfindungsgemäßen Verfahren kommt man diesen Anforderungen in einem Bereich von 5 - 60 Gew.-%, besonders bevorzugt 25 - 55 Gew.-%, ganz besonders bevorzugt 30 - 50 Gew.-%, jeweils bezogen auf die bezogen auf die Summe auf die Summe von W und M und bezogen auf das Metall am besten nach.

Die besten Ergebnisse bezüglich der Homogenität des Pulvers werden erhalten, wenn die Wolfram- und Alkalimetallverbindungen in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die unter den Reaktionsbedingungen in die Oxide überführbar sind. Dabei kann es sich um anorganische Metallverbindungen, wie Nitrate, Chloride, Bromide, oder organische Metallverbindungen, wie Alkoxide oder Carboxylate handeln. Besonders vorteilhaft können Nitrate eingesetzt werden.

Als organische Lösungsmittel können bevorzugt Alkohole wie Methanol, Ethanol, n-Propanol, isoPropanol, n-Butanol oder tert.-Butanol, Diole wie Ethandiol, Pentandiol, 2-Methyl-2,4-pentandiol, Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure oder Laurinsäure eingesetzt werden. Weiterhin können Benzol, Toluol, Naphtha und/oder Benzin eingesetzt werden. Bevorzugt wird ein wässeriges Lösungsmittel oder Wasser eingesetzt.

### Beispiele

Die Beispiele 1 - 5 zeigen die Herstellung von Alkali-Wolfram-Mischoxidpulvern nach dem erfindungsgemäßen zweistufigen Verfahren. Beispiel 6 zeigt ein Vergleichsbeispiel eines zweistufigen Verfahrens. Die Beispiele 7 - 11 zeigen die Herstellung von Kalium-Wolfram-Mischoxidpulvern nach dem erfindungsgemäßen einstufigen Verfahren.

### Beispiel 1

Es wird eine Lösung von 2165 g Ammoniummetawolframat, 335 g Cäsiumnitrat und 12.020 g Wasser hergestellt. Die Gesamtkonzentration von W und Cs, jeweils als Metall, beträgt 12,7 Gew.-%.

Reaktionszone 1: Durch Verdüsen von 2500 g/h dieser Lösung mit 5 Nm³/h Luft als Verdüsungsgas mittels einer Zweistoffdüse bei Raumtemperatur (23°C) wird ein Aerosol erhalten. Dieses wird mit 8 Nm³/h (0,357 kmol/h) Wasserstoff und 30 Nm³/h Luft (0,281 kmol O₂/h) zur Reaktion gebracht. Die Temperatur 50 cm unterhalb des Brennermundes beträgt 527 °C.

Die Verweilzeit in Reaktionszone 1 beträgt 0,48 Sekunden, bei einer Gasgeschwindigkeit von 2,89 Nm/s.

Reaktionszone 2: Zusätzlich werden 15 Nm³/h Sekundärluft (0,141 kmol O₂/h) außerhalb der Reaktionszone 1 in den Reaktor eingebracht.

Die Verweilzeit in Reaktionszone 2 beträgt 0,36 Sekunden, bei einer Gasgeschwindigkeit von 1,65 Nm/s. Nachfolgend wird das Reaktionsgemisch abgekühlt und der erhaltene Feststoff auf einem Filter von den gasförmigen Stoffen abgeschieden.

Der Feststoff weist eine BET-Oberfläche von 7,2 m²/g auf.

Der Feststoff aus der FSP wird unter Stickstoffatmosphäre mit einer Aufheizgeschwindigkeit von 8,0 °C/min auf eine Endtemperatur von 500°C erhitzt und dort über einen Zeitraum von 2 Stunden bei einer Temperatur von 500°C in einer Formiergasatmosphäre (70/30 Vol.-% N₂/H₂, Volumenstrom 100 NI/h) behandelt.

Der erhaltene reduzierte Feststoff weist eine BET-Oberfläche von 5,4 m²/g. Eine Dispersion des Feststoffes, 18 Gew.-% in 1-Methoxy-2-propanol, zeigt eine tiefblaue Farbe.

Die Beispiele 2 bis 6 werden analog durchgeführt. Beispiel 6 ist ein Vergleichsbeispiel, bei dem die mittleren Geschwindigkeiten in beiden Reaktionszonen gleich sind. Einsatzstoffe und Reaktionsbedingungen finden sich in Tabelle 1. Tabelle 2 zeigt berechnete Größen.

Das erfindungsgemäße zweistufige Verfahren ist darauf gerichtet in einem flammenpyrolytischen Prozess ein Material zu erhalten, welches eine niedrige BET-Oberfläche und bereits eine recht hohe Kristallinität aufweist. Im nachfolgenden Reduktionsschritt wird die BET-Oberfläche nur noch wenig verringert, während die Reduktion bei moderaten Bedingungen rasch verläuft, ohne dass eine nennenswerte Versinterung auftritt. Entsprechend gut läßt sich diese Material dispergieren. Im Vergleichsbeispiel 6 wird aus der FSP ein Material mit erhöhter BET-Oberfläche erhalten. Dieses Material ist schwieriger zu reduzieren. Das reduzierte Material selbst ist schwieriger zu dispergieren.

### Beispiel 7

Es wird eine Lösung von 4316 g Ammoniummetawolframat, 502 g Kaliumacetat, 64 g Eisessig und 4831 g Wasser hergestellt. Die Gesamtkonzentration von W und und K, jeweils als Metall, beträgt 34,2 Gew.-%.

Durch Verdüsen von 9,0 kg/h dieser Lösung mit 9,2 Nm³/h Luft als Verdüsungsgas mittels einer Zweistoffdüse bei Raumtemperatur (23°C) wird ein Aerosol erhalten. Dieses wird mit 10 Nm³/h Wasserstoff und 13,5 Nm³/h Luft zur Reaktion gebracht. Die Temperatur 50 cm unterhalb des Brennermundes beträgt 464°C. Lambda ist 0,87. Die Verweilzeit beträgt 1,9 Sekunden.

Der Feststoff weist eine BET-Oberfläche von 2,4 m²/g auf. Eine Dispersion des Feststoffes, 18 Gew.-% in 1-Methoxy-2-propanol, zeigt eine tiefblaue Farbe. Die Röntgenstrukturanalyse zeigt ein hexagonales Kalium-Wolfram-Mischoxid.

Die Beispiele 8 bis 11 werden analog mit der gleichen Lösung durchgeführt. Die Reaktionsbedingungen finden sich in Tabelle 3.

Die Beispiele 7 bis 11 zeigen, dass reduzierte Pulver mittels eines einstufigen Verfahrens, einer Flammenspraypyrolyse, herstellbar sind.

**Tabelle 1: Zweistufiges Verfahren - Einsatzstoffe - BET-Oberfläche der Pulver**

| **Beispiel** | | **1** | **2** | **3** | **4** | **5** | **6 (Vgl)** |
|---|---|---|---|---|---|---|---|
| Lösung | | | | | | | |
| Ammoniummetawolframat | g/h | 216,5 | 241,5 | 143,8 | 145,3 | 144,9 | 216,5 |
| Cäsium nitrat | g/h | 33,5 | - | - | - | - | 33,5 |
| Kaliumnitrat | g/h | - | 8,5 | - | - | 3,2 | - |
| Natriumnitrat | g/h | - | - | 6,2 | 47,4 | 1,9 | - |
| Konzentration^{a)} | Gew.-% | 12,7 | 13,0 | 13,0 | 13,0 | 13,0 | 12,7 |

| Gase | | | | | | | |
|---|---|---|---|---|---|---|---|
| Zerstäuberluft | Nm³/h | 5 | 5 | 5 | 5 | 5 | 5 |
| Wasserstoff | Nm³/h | 8 | 6 | 6 | 6 | 6 | 8 |
| Primärluft | Nm³/h | 30 | 30 | 30 | 30 | 30 | 30 |
| Sekundärluft | Nm³/h | 15 | 15 | 15 | 15 | 15 | 53 |
| Temperatur^{b)} | °C | 527 | 531 | 525 | 528 | 524 | 524 |
| Red. Atmosphäre | Vol.-% | 70:30 N₂/H₂^{c)} | | | | | |
| T_{Reduktion}/t_{Reduktion} | °C/h | 500/2 | | | | | |
| BET_{FSP} | m²/g | 7,2 | 3,9 | 2,0 | 2,1 | 2,1 | 16,2 |
| BET_{reduziert} | m²/g | 5,4 | 3,5 | 1,8 | 1,8 | 2,0 | 5,8 |
| BET_{reduziert}/BET_{FSP} | | 0,75 | 0,90 | 0,90 | 0,86 | 0,95 | 0,36 |

| | | | | | | | |
|---|---|---|---|---|---|---|---|
| a) Bezogen auf Metalle ; b) Reaktionszone 1; 50 cm unter Reaktoreintritt; c) Volumenstrom 100 NI/h | | | | | | | |

**Tabelle 2: Zweistufiges Verfahren - Berechnete Größen**

| **Beispiel** | | **1** | **2** | **3** | **4** | **5** | **6 (Vgl)** |
|---|---|---|---|---|---|---|---|
| H₂ | kmol/h | 0,357 | 0,268 | 0,268 | 0,268 | 0,268 | 0,357 |
| O_{2, primär} | kmol/h | 0,281 | 0,281 | 0,281 | 0,281 | 0,281 | 0,281 |
| O_{2, sekundär} | kmol/h | 0,141 | 0,141 | 0,141 | 0,141 | 0,141 | 0,496 |
| O_{2, Zerst.} | kmol/h | 0,047 | 0,047 | 0,047 | 0,047 | 0,047 | 0,047 |
| O_{2,ttl} | kmol/h | 0,469 | 0,469 | 0,469 | 0,469 | 0,469 | 0,824 |
| O_{2,primär}/0,5H₂ | | 1,57 | 2,10 | 2,10 | 2,10 | 2,10 | 1,57 |
| O_{2,primär+ Zerst.}/0,5H₂ | | 1,84 | 2,45 | 2,45 | 2,45 | 2,45 | 1,84 |
| O_{2,ttl} /0,5H₂ | | 2,63 | 3,50 | 3,50 | 3,50 | 3,50 | 4,62 |
| v₁^{a)} | Nm/s | 2,89 | 2,77 | 2,74 | 2,75 | 2,74 | 2,89 |
| v₂^{a)} | Nm/s | 1,65 | 1,61 | 1,45 | 1,59 | 1,57 | 2,89 |
| ₜ₁^{b)} | s | 0,48 | 0,51 | 0,51 | 0,51 | 0,51 | 0,48 |
| ₜ₂^{b)} | s | 0,36 | 0,37 | 0,41 | 0,38 | 0,38 | 0,21 |
| v₂/v₁ | | 0,57 | 0,58 | 0,53 | 0,58 | 0,57 | 1,00 |
| t₂/t₁ | | 0,75 | 0,74 | 0,81 | 0,74 | 0,75 | 0,43 |

| | | | | | | | |
|---|---|---|---|---|---|---|---|
| a) v₁, v₂ = mittlere Gasgeschwindigkeit Reaktiionszone 1,2; b) mittlere Verweilzeit Reaktionszone 1, 2; | | | | | | | |

**Tabelle 3: Einstufiges Verfahren - Einsatzstoffe - BET-Oberfläche der Pulver**

| Besipiel | | **7** | **8** | **9** | **10** | **11** |
|---|---|---|---|---|---|---|
| Lösung | | | | | | |
| Ammoniummetawolframat | g/h | 4316 | | | | |
| Kaliumacetat | g/h | 502 | | | | |
| Lösung^{a)} | Gew.-% | 34,2 | 34,2 | 34,2 | 34,2 | 42,8 |
| Durchsatz | kg/h | 9,0 | 6,0 | 6,0 | 9,0 | 12,0 |

| Gase | | | | | | |
|---|---|---|---|---|---|---|
| Luft | Nm³/h | 13,5 | 13,5 | 13,5 | 13,5 | 13,5 |
| Zerstäuberluft | Nm³/h | 9,2 | 9,2 | 9,4 | 9,5 | 9,5 |
| Gesamtsauerstoff | Nm³/h | 4,77 | 4,77 | 4,81 | 4,83 | 4,83 |
| Wasserstoff | Nm³/h | 10,0 | 10,0 | 12,0 | 12,0 | 12,0 |
| Lambda^{b)} | | 0,87 | 0,87 | 0,80 | 0,81 | 0,81 |
| Temperatur^{c)} | °C | 464 | 449 | 587 | 566 | 590 |
| BET-Oberfläche | m²/g | 2,4 | 2,0 | 1,3 | 1,7 | 1,5 |

| | | | | | | |
|---|---|---|---|---|---|---|
| a) Bezogen auf Metalle; b) lambda = Gesamtsauerstoff/0,5 x Wasserstoff; c) Reaktionszone 1; 50 cm unter Reaktoreintritt | | | | | | |

## Patentansprüche

1. Verfahren zur Herstellung eines Wolframoxidpulvers oder eines Wolfram-Mischoxidpulvers der allgemeinen Formel MₓWO₃, wobei M = Na, K, Rb, Li und/oder Cs, 0,1 ≤ x ≤ 0,5 umfassend die aufeinanderfolgenden Schritte:
a) Bereitstellung einer Lösung, enthaltend jeweils wenigstens eine Wolframverbindung und gegebenenfalls wenigstens eine M enthaltende Verbindung in einer Konzentration entsprechend der Stöchiometrie MₓWO₃,
b) Zerstäuben der Lösung unter Bildung eines Aerosoles in einen Reaktionsraum hinein,
c) Reaktion des Aerosoles im Reaktionsraum mit einer Wasserstoff-/Sauerstoff-Flamme für die 1 < O_{2,primär}/0,5H₂ ≤ 3 gilt,
wobei der Reaktionsraum so ausgebildet ist, dass er zwei Reaktionszonen mit zwei unterschiedlichen Geschwindigkeiten v₁ und v₂ des Reaktionsgemisches umfasst mit v₂ = 0,3 - 0,8 v₁ und 0,5 ≤ v₁ ≤ 10 Nm/s,
d) Abtrennung des Feststoffes von dampf- oder gasförmigen Stoffen und
e) Überleiten eines reduzierend wirkenden Gasstromes über den abgetrennten Feststoff bei einer Temperatur von 450-700°C.

2. Verfahren nach Anspruch 1, **dadurch gekennzeichnet, dass**
1,5 ≤ O_{2,ttl} /0,5H₂ ≤ 5 ist.

3. Verfahren nach den Ansprüchen 1 oder 2, **dadurch gekennzeichnet, dass**
t₂ > 0,5 t₁, wobei
t₁ die mittlere Verweilzeit des Reaktionsgemisches in Reaktionszone 1 und
t₂ die mittlere Verweilzeit des Reaktionsgemisches in Reaktionszone 2 ist.

4. Verfahren nach den Ansprüchen 1 bis 3, **dadurch gekennzeichnet, dass** die thermische Behandlung über einen Zeitraum von 1 - 10 Stunden durchgeführt wird.

5. Verfahren nach den Ansprüchen 1 bis 4, **dadurch gekennzeichnet, dass** als reduzierend wirkender Gasstrom Wasserstoff, Wasserstoff/Stickstoff-Gemische oder Wasserstoff/Edelgas-Gemische eingesetzt werden.

6. Verfahren zur Herstellung eines Wolframoxidpulvers oder eines Wolfram-Mischoxidpulvers der allgemeinen Formel MₓWO₃, wobei M = Na, K, Rb, Li und/oder Cs, 0,1 ≤ x ≤ 0,5 umfassend die aufeinanderfolgenden Schritte:
a) Bereitstellung einer Lösung, enthaltend jeweils wenigstens eine Wolframverbindung und gegebenenfalls wenigstens eine M enthaltende Verbindung in einer Konzentration entspreched dern Stöchiometrie MₓWO₃,
b) Zerstäuben der Lösung unter Bildung eines Aerosoles in einen Reaktionsraum hinein,
c) Reaktion des Aerosoles im Reaktionsraum mit einer Wasserstoff-/Sauerstoff-Flamme mit lambda < 1, wobei gilt: lambda = Gesamtsauerstoff/0,5 x Wasserstoff,
d) Abtrennung des Feststoffes von dampf- oder gasförmigen Stoffen.

7. Verfahren nach Anspruch 1 bis 6, **dadurch gekennzeichnet, dass** die mittlere Verweilzeit im Reaktionsraum 1 - 5 s beträgt.

8. Verfahren nach Anspruch 1 bis 7, **dadurch gekennzeichnet, dass** die Zerstäubung mittels einer Ein- oder Mehrstoffdüse erfolgt und der mittlere Tropfendurchmesser des Aerosols weniger als 120 µm ist.

9. Verfahren nach den Ansprüchen 1 bis 8, **dadurch gekennzeichnet, dass** anorganische Metallverbindungen eingesetzt werden.

10. Verfahren nach den Ansprüchen 1 bis 9, **dadurch gekennzeichnet, dass** wässerige Lösungen eingesetzt werden.

11. Verfahren nach den Ansprüchen 1 bis 10, **dadurch gekennzeichnet, dass** die Konzentration der Metalle in der Lösung 5 - 60 Gew.-% beträgt.

## Claims

1. Process for producing a tungsten oxide powder or a tungsten mixed oxide powder of general formula MₓWO₃, wherein M = Na, K, Rb, Li and/or Cs, 0.1 ≤ x ≤ 0.5, comprising the consecutive steps of:
a) providing a solution comprising respectively at least one tungsten compound and optionally at least one M-comprising compound in a concentration corresponding to the stoichiometry MₓWO₃,
b) atomizing the solution, thus forming an aerosol, into a reaction space,
c) reacting the aerosol in the reaction space with a hydrogen/oxygen flame for which the expression 1 < O_{2,primary}/0.5H₂ ≤ 3 applies,
wherein the reaction space is configured such that it comprises two reaction zones with two different velocities of the reaction mixture v₁ and v₂ where v₂ = 0.3 - 0.8 v₁ and 0.5 ≤ v₁ ≤ 10 Nm/s,
d) separating the solid from vaporous or gaseous substances and
e) passing a reducing gas stream over the separated solid at a temperature of 450-700°C.

2. Process according to Claim 1, **characterized in that** 1.5 ≤ O_{2,ttl} /0.5H₂ ≤ 5.

3. Process according to Claim 1 or 2, **characterized in that**
t₂ > 0.5 t₁, wherein
t₁ is the average residence time of the reaction mixture in reaction zone 1 and
t₂ is the average residence time of the reaction mixture in reaction zone 2.

4. Process according to Claims 1 to 3, **characterized in that**
the thermal treatment is performed over a period of 1 - 10 hours.

5. Process according to Claims 1 to 4, **characterized in that**
hydrogen, hydrogen/nitrogen mixtures or hydrogen/noble gas mixtures are employed as the reducing gas stream.

6. Process for producing a tungsten oxide powder or a tungsten mixed oxide powder of general formula MₓWO₃, wherein M = Na, K, Rb, Li and/or Cs, 0.1 ≤ x ≤ 0.5, comprising the consecutive steps of:
a) providing a solution comprising respectively at least one tungsten compound and optionally at least one M-comprising compound in a concentration corresponding to the stoichiometry MₓWO₃,
b) atomizing the solution, thus forming an aerosol, into a reaction space,
c) reacting the aerosol in the reaction space with a hydrogen/oxygen flame having a lambda value < 1, wherein: lambda = total oxygen/0.5 x hydrogen,
d) separating the solid from vaporous or gaseous substances.

7. Process according to Claims 1 to 6, **characterized in that**
the average residence time in the reaction space is 1 - 5 s.

8. Process according to Claims 1 to 7, **characterized in that**
the atomization is effected by means of a single- or multimaterial nozzle and the mean droplet diameter of the aerosol is less than 120 µm.

9. Process according to Claims 1 to 8, **characterized in that**
inorganic metal compounds are employed.

10. Process according to Claims 1 to 9, **characterized in that**
aqueous solutions are used.

11. Process according to Claims 1 to 10, **characterized in that**
the concentration of the metals in the solution is 5 - 60 wt%.

## Revendications

1. Procédé pour la préparation d'une poudre d'oxyde de tungstène ou d'une poudre d'oxyde mixte de tungstène de formule générale MₓWO₃, dans laquelle M = Na, K, Rb, Li et/ou Cs, 0,1 ≤ x ≤ 0,5, comprenant les étapes consécutives :
a) préparation d'une solution, contenant à chaque fois au moins un composé de tungstène et le cas échéant au moins un composé contenant M, en une concentration correspondant à la stoechiométrie MₓWO₃,
b) pulvérisation de la solution avec formation d'un aérosol dans une chambre de réaction,
c) réaction de l'aérosol dans la chambre de réaction avec une flamme hydrogène/oxygène pour laquelle 1 < O_{2,primaire}/0,5H₂ ≤ 3,
la chambre de réaction étant conçue de manière telle qu'elle comprend deux zones de réaction présentant deux vitesses différentes v₁ et v₂ du mélange réactionnel, v₂ = 0,3-0,8 v₁ et 0,5 ≤ v₁ ≤ 10 Nm/s,
d) séparation du solide des substances gazeuses ou sous forme de vapeur et
e) passage d'un flux gazeux à action réductrice sur le solide séparé à une température de 450-700°C.

2. Procédé selon la revendication 1, **caractérisé en ce que** 1,5 ≤ O_{2,ttl}/0,5H₂ ≤ 5.

3. Procédé selon les revendications 1 ou 2, **caractérisé en ce que** t₂ > 0,5 t₁, où
t₁ représente le temps de séjour moyen du mélange réactionnel dans la zone de réaction 1 et
t₂ représente le temps de séjour moyen du mélange réactionnel dans la zone de réaction 2.

4. Procédé selon les revendications 1 à 3, **caractérisé en ce que** le traitement thermique est réalisé sur un laps de temps de 1-10 heures.

5. Procédé selon les revendications 1 à 4, **caractérisé en ce que** de l'hydrogène, des mélanges hydrogène/azote ou des mélanges hydrogène/gaz noble sont utilisés comme flux gazeux à action réductrice.

6. Procédé pour la préparation d'une poudre d'oxyde de tungstène ou d'une poudre d'oxyde mixte de tungstène de formule générale MₓWO₃, dans laquelle M = Na, K, Rb, Li et/ou Cs, 0,1 ≤ x ≤ 0,5, comprenant les étapes consécutives :
a) préparation d'une solution, contenant à chaque fois au moins un composé de tungstène et le cas échéant au moins un composé contenant M, en une concentration correspondant à la stoechiométrie MₓWO₃,
b) pulvérisation de la solution avec formation d'un aérosol dans une chambre de réaction,
c) réaction de l'aérosol dans la chambre de réaction avec une flamme hydrogène/oxygène pour laquelle lambda < 1, où lambda = oxygène total/0,5 x hydrogène,
d) séparation du solide des substances gazeuses ou sous forme de vapeur.

7. Procédé selon la revendication 1 à 6, **caractérisé en ce que** le temps de séjour moyen dans la chambre de réaction est de 1-5 s.

8. Procédé selon la revendication 1 à 7, **caractérisé en ce que** la pulvérisation a lieu via une buse à une ou plusieurs substances et le diamètre moyen des gouttes de l'aérosol est inférieur à 120 µm.

9. Procédé selon les revendications 1 à 8, **caractérisé en ce que** des composés métalliques inorganiques sont utilisés.

10. Procédé selon les revendications 1 à 9, **caractérisé en ce que** des solutions aqueuses sont utilisées.

11. Procédé selon les revendications 1 à 10, **caractérisé en ce que** la concentration en métaux dans la solution est de 5-60% en poids.
